# EUROPÄISCHE PATENTSCHRIFT

(11) **EP 1 662 159 B1**
(45) Veröffentlichungstag und Bekanntmachung des Hinweises auf die Patenterteilung: **17.03.2010**
(21) Anmeldenummer: 05111422.1
(22) Anmeldetag: 29.11.2005
(51) Int. Cl.: F16C 29/00, B60N 2/06

(54) **Linearführungssystem mit Stellelementen**
Linear guide system with actuator
Système de guide linéaire avec élément de positionnement

(30) Priorität: 30.11.2004 DE 102004057714
(43) Veröffentlichungstag der Anmeldung: 31.05.2006
(73) Patentinhaber: Accuride International GmbH, 65582 Diez (DE)
(72) Erfinder: Neuhaus, Christoph, 56412 Niederelbert (DE)
(74) Vertreter: Weber, Roland

(56) Entgegenhaltungen:
- EP-A- 0 653 266
- EP-A- 1 134 444
- SE-C2- 512 827
- US-A- 3 842 690

## Beschreibung

Die vorliegende Erfindung betrifft ein Linearführungssystem mit wenigstens zwei in Längsrichtung gegeneinander verfahrbaren Schienenelementen.

Linearführungssysteme, insbesondere Teleskopschienen, sind für vielfältigste Anwendungsbereiche bekannt. Üblicherweise bestehen solche Linearführungssysteme aus zwei oder mehr gegeneinander verfahrbaren länglichen Schienenelementen aus Baustahl, Edelstahl oder Kunststoff, wobei die Schienenelemente über Kugellager, Gleitlager, Rollenlager, Walzenlager oder zwischen den Führungs- oder Gleitflächen der Schienenelemente angeordnete Gleitelemente verschiebbar bzw. verfahrbar gegeneinander gelagert sind. Typische Einsatzgebiete für Linearführungssysteme bzw. Teleskopschienen sind Schubladenführungen, Gargutträgerauszugsysteme in Backöfen, Auszugssysteme für Ladeflächen in Fahrzeugen, Führungssysteme für Bauelemente in Elektronikschänken usw. Zunehmend werden Linearführungssysteme bzw. Teleskopschienen auch in Fahrzeugen, wie Pkw, Flugzeugen und Eisenbahnwaggons zur Einstellung verschiedenster Elemente eingesetzt. Beispielsweise finden Linearführungssysteme Anwendung bei der Verstellung von Komfortelementen, wie bei der Längen- und Höhenverstellung von Mittelarmlehnen und Seitenarmauflagen in Pkw, der Sitztiefen- und Sitzlängenverstellung für eine ergonomische Sitzposition usw. Für derartige Komfortelemente, aber auch bei anderen Anwendungen, ist es erforderlich oder erwünscht, die Linearführungssysteme in verschiedenen Positionen ihres Verfahrweges arretieren zu können. Darüber hinaus ist es häufig erwünscht, eine elektrische Längenverstellbarkeit der Linearführungssysteme bereitzustellen. Außerdem erfordern einige Anwendungen von Linearführungssystemen eine Kraftunterstützung beim Einfahren (Verkürzen) oder Ausfahren (Verlängern) der Linearführungssysteme. Beispielsweise ist es für Armauflagen in einem Pkw erwünscht, daß diese zum einen in verschiedenen Höhenpositionen arretierbar sind, damit sie an die Körpergröße und das Komfortempfinden eines Benutzers angepaßt werden können. Darüber hinaus soll die Höhenverstellung kraftunterstützt sein, so daß die Armlehne beispielsweise nach einer Entriegelung kraftunterstützt höher eingestellt wird und durch Niederdrücken mit dem Arm tiefer eingestellt werden kann. Alternativ kann es auch wünschenswert sein, die Höhenverstellung mittels eines Elektromotors durchzuführen.

Bei bekannten Systemen werden die höhenverstellbaren Elemente, z. B. Armauflagen in einem Pkw, an Linearführungen, wie z. B. Teleskopschienen oder einer Gestängeführung, montiert, wobei das Linearführungssystem lediglich für die Führung, die Stabilität und die Richtung des Verfahrweges vorgesehen ist. Die Arretierung in verschiedenen Positionen und eine eventuelle Kraftunterstützung werden durch weitere separate Bauteile realisiert, die neben dem Linearführungssystem ebenfalls an den geführten Elementen und der Basis, an der diese befestigt sind, angeordnet sind. Dies erfordert eine aufwendige Konstruktion, Raum für den Einbau mehrerer Elemente nebeneinander sowie eine aufwendige Montage.

Die Dokumente EP 1 134 444 A, EP 0 653 266 A und SE 512 827 C2 zeigen die Merkmale des Oberbegriffs des Anspruchs 1.

Die Aufgabe der vorliegenden Erfindung bestand darin, diese Nachteile des Standes der Technik zu überwinden.

Gelöst wird diese Aufgabe durch ein Linearführungssystem der eingangs genannten Art, bei dem an den Schienenelementen Stellelemente vorgesehen sind, welche die für das Verfahren der Schienenelemente erforderliche Kraft unterstützen oder hemmen und/oder welche ein Arretieren der Schienenelemente in verschiedenen Verfahrpositionen erlauben, wobei als ein erstes Stellelement wenigstens ein Federelement vorgesehen ist, welches so an den gegeneinander verfahrbaren Schienenelementen angeordnet ist, daß seine Federkraft die für das Verfahren der Schienenelemente erforderliche Kraft unterstützt oder hemmt, und als ein zweites Stellelement an einem ersten Schienenelement eine Spindelschraube vorgesehen ist, die sich in Verfahrrichtung der Schienenelemente erstreckt, oder das Federelement einen Federzylinder aufweist, auf dessen Außenseite ein Spindelgewinde vorgesehen ist.

Ein Vorteil des erfindungsgemäßen Linearführungssystems besteht darin, daß die Linearführung, welche vorteilhafterweise eine Teleskopschiene ist, zusammen mit den erforderlichen Stellelementen als ein integrales Bauteil geliefert und verarbeitet werden kann. Das erfindungsgemäße Linearführungssystem bietet gegenüber bekannten Systemen eine deutliche Platzersparnis beim Einbau sowie einen deutlich geringeren Montageaufwand, da weniger separate Teile montiert werden müssen. Das erfindungsgemäße System kann in einem Einbauteil die Linearführung, ein kraftunterstützendes bzw. in entgegengesetzter Verfahrrichtung krafthemmendes Stellelement und/oder ein die Verfahrposition arretierendes Stellelement umfassen, welche bislang stets als separate Bauteile montiert wurden. Hierdurch können neben der Platzersparnis auch erhebliche Montagekosten eingespart werden. Die Integration der verschiedenen Funktionselemente in einem Bauteil und die damit verbundene Platzersparnis eröffnet weitere Gestaltungsmöglichkeiten als bisher, wie beispielsweise schlankere und elegantere Ausführungen von Komfortelementen in Fahrzeugen. Darüber hinaus kann mit dem erfindungsgemäßen Linearführungssystem auch eine Gewichtseinsparung gegenüber der bekannten separaten Montage einzelner Funktionselemente erreicht werden, was insbesondere im Pkw- und Flugzeugbau entscheidende Kriterien sind.

Dabei ist als ein erstes Stellelement wenigstens ein Federelement vorgesehen, welches so an den gegeneinander verfahrbaren Schienenelementen angeordnet ist, daß seine Federkraft die für das Verfahren der Schienenelemente erforderliche Kraft unterstützt oder hemmt, und als ein zweites Stellelement an einem ersten Schienenelement ist eine Spindelschraube vorgesehen, die sich in Verfahrrichtung der Schienenelemente erstreckt.

In einer alternativen Ausführungsform der vorgenannten Kombination aus Federelement und Spindelschraube mit Schloßmutter als Arretierungsmechanismus sind diese beiden Elemente in der Weise realisiert, daß das Federelement einen Federzylinder aufweist, auf dessen Außenseite ein Spindelgewinde vorgesehen ist. Dadurch entfällt die Notwendigkeit für eine separate Spindelschraube neben dem Federelement, und die als Arretiermechanismus vorgesehene Schloßmutter tritt direkt mit dem Außengewinde an dem Federelement in Eingriff. Hierdurch wird eine weitere Platz- und Gewichtsersparnis sowie eine Vereinfachung des gesamten Systems erreicht.

Bei einer besonders bevorzugten Ausführungsform des erfindungsgemäßen Linearführungssystems ist das Federelement vorzugsweise ein Gasdruckfederelement, Gaszugfederelement, Spiraldruckfederelement oder Spiralzugfederelement, welches so an den gegeneinander verfahrbaren Schienenelementen angeordnet ist, daß seine Federkraft die für das Verfahren der Schienenelemente erforderliche Kraft unterstützt oder hemmt. Ganz besonders bevorzugt ist das Stellelement ein Gasdruckfederelement. Je nach Anwendung des erfindungsgemäßen Linearführungssystems wirkt die Federkraft des als Federelement ausgebildeten Stellelements zwischen den Schienenelementen so, daß sie die erforderliche Kraft zum Auseinanderfahren oder zum Einfahren der Schienenelemente unterstützen. In einer Anwendung, wie beispielsweise einer höhenverstellbaren Armlehne in einem Pkw, kann es zweckmäßig sein, ein Gasdruckfederelement zwischen den Schienenelementen vorzusehen, das eine Kraftunterstützung für das Verfahren der Schienenelemente in den auseinandergefahrenen Zustand liefert. So fährt die damit ausgestattete Armstütze durch das Federelement krafturiterstützt nach oben, wenn das Linearführungssystem oder die Armstütze selbst nicht in ihrer Position arretiert ist. Das Absenken der Armstütze erfolgt dann durch Aufbringen einer Kraft von oben, zum Beispiel durch Herabdrücken mit dem Arm eines Benutzers.

Die federnd zueinander angeordneten Abschnitte des Federelements sind mit jeweils einem der gegeneinander verfahrbaren Schienenelemente fest oder lösbar verbunden. Besonders bevorzugt ist es, wenn das oder die Federelemente zwischen den einander zugewandten Seiten der Schienenelemente angeordnet sind: Bei herkömmlichen Teleskopschienen ist zwischen den Schienenelementen üblicherweise ein Zwischenraum vorhanden, der für die Aufnahme eines solchen Federelements ausreicht oder durch entsprechende Anpassung der Form der Schienenelemente gegenüber herkömmlichen Teleskopschienen nur geringfügig vergrößert werden muß, um entsprechende Federelemente aufzunehmen. Hierdurch kann gegenüber herkömmlichen Systemen erheblicher Platz eingespart werden, der dann für andere Bauelemente zur Verfügung steht oder eine schlankere Ausgestaltung des gesamten Aufbaus erlaubt.

In einer weiteren bevorzugten Ausführungsform des erfindungsgemäßen Linearführungssystems ist an dem zweiten Schienenelement eine die Spindelschraube umgreifende Schraubenmutter mit einem zu der Spindelschraube passenden Innengewinde vorgesehen. Bei dieser Ausführungsform ist vorzugsweise die Spindelschraube um ihre Längsachse drehbar an dem ersten Schienenelement gelagert. Alternativ kann auch die die Spindelschraube umgreifende Schraubenmutter um die Längsachse der Spindelschraube drehbar an dem zweiten Schienenelement gelagert sein. Diese Ausführungsform des erfindungsgemäßen Stellelements erlaubt ein Verfahren der Schienenelemente des Linearführungssystems durch Drehen der Spindelschraube oder der die Spindelschraube umgreifenden Schraubenmutter. Zweckmäßigerweise ist hierfür die Spindelschraube an einem Ende mit einem entsprechenden Drehmechanismus für ein handbetätigtes Drehen oder ein Drehen mittels eines Elektromotors verbunden. In beiden Fällen kann ein Getriebe für eine entsprechende Übersetzung geringerer Drehzahlen von dem Mechanismus für das handbetätigte Drehen oder dem Elektromotor auf höhere Drehzahlen der Spindelschraube vorgesehen sein. Dies erlaubt das Vorsehen geringer Gewindesteigungen an der Spindelschraube, wodurch nur ein niedriges Drehmoment zur Übertragung hoher Verfahrkräfte auf das Linearführungssystem erforderlich ist.

Zweckmäßigerweise erstreckt sich die Spindelschraube im wesentlichen über die gesamte Länge des ersten Schienenelementes. Sie kann sich mit Vorteil auch auf wenigstens einer Seite des Schienenelementes über dieses hinaus erstrecken, um den überstehenden Abschnitt mit einen entsprechenden Drehmechanismus zu verbinden. Vorzugsweise sind die Spindelschraube und die Schraubenmutter dieses Stellelements zwischen den einander zugewandten Seiten der Schienenelemente angeordnet. Daraus ergeben sich die gleichen platzsparenden Vorteile, wie sie oben für das Federelement beschrieben sind.

In einer weiteren bevorzugten Ausführungsform des erfindungsgemäßen Linearführungssystems ist als Stellelement an einem ersten Schienelement eine Spindelschraube vorgesehen, die sich in der Verfahrrichtung der Schienenelemente erstreckt, und an dem zweiten Schienenelement eine die Spindelschraube umgreifende Schloßmutter.

Bei dem sogenannten "Schloßmutterprinzip" greift ein Element, die sogenannte Schloßmutter, in das Gewinde der Spindelschraube ein, wie es bei einer herkömmlichen Schraubenmutter der Fall ist. Darüber hinaus läßt sich die Schloßmutter öffnen und von dem Gewinde der Spindelschraube außer Eingriff bringen. Das bei der vorliegenden Erfindung angewendete Schloßmutterprinzip kann somit zwei Funktionen erfüllen. Zum einen kann die Funktion einer herkömmlichen Schraubenmutter realisiert werden, so daß die Schienenelemente durch Drehen der Spindelschraube oder der Schloßmutter gegeneinander verfahrbar sind. Zum anderen kann die Schloßmutter zusätzlich oder ausschließlich als Arretierungs- und Entarretierungsmechanismus für die gegeneinander verfahrbaren Schienenelemente eingesetzt werden. So kann das eine Schienenelement durch Öffnen und außer Eingriff bringen der Schloßmutter und der Spindelschraube von dem anderen Schienenelement entarretiert, über eine beliebige Wegstrecke verfahren und anschließend durch Schließen und in Eingriff bringen der Schloßmutter mit dem Spindelgewinde wieder arretiert werden.

Das Schloßmutterprinzip ist in der Technik grundsätzlich bekannt. Zweckmäßigerweise besteht die Schloßmutter aus zwei Abschnitten, die dazwischen einen Durchgang aufweisen, der im wesentlichen dem Durchmesser der Spindelschraube entspricht bzw. diesem angepaßt ist. Der Durchgang weist Abschnitte eines Innengewindes oder auch nur vereinzelte Vorsprünge für den Eingriff mit dem Außengewinde der Spindelschraube auf. Die beiden Abschnitte der Schloßmutter lassen sich für das außer Eingriff bringen mit der Spindelschraube voneinander entfernen. Bevorzugt ist hierfür an den beiden Abschnitten der Schloßmutter ein Gelenk oder Scharnier vorgesehen, über welches sich die beiden Abschnitte voneinander wegklappen bzw. aufspreizen lassen. Auf der bezüglich der Spindelschraube gegenüberliegenden Seite des Gelenks oder Scharniers ist zweckmäßigerweise ein Spreizmechanismus zum Auseinanderdrücken der beiden Abschnitte der Schloßmutter vorgesehen. Dieser Spreizmechanismus kann ein zwischen die beiden Abschnitte einführbares keilförmiges Element sein. Vorzugsweise ist der Mechanismus zum Spreizen der beiden Abschnitte der Schloßmutter eine an einem der beiden Abschnitte exzentrisch drehbar angeordnete Scheibe, deren Umfangsfläche beim Drehen der Scheibe gegen den zweiten Abschnitt der Schloßmutter drückt und die beiden Abschnitte auseinanderspreizt. Die Rückstellung der beiden Abschnitte der Schloßmutter in den geschlossenen Zustand erfolgt zweckmäßigerweise mittels einer an den beiden Abschnitten vorgesehenen Zugfeder.

Selbstverständlich können die verschiedenen hierin beschriebenen Stellelemente des erfindungsgemäßen Linearführungssystems miteinander kombiniert und gemeinsam realisiert werden.

Bei einer besonders bevorzugten Ausführungsform der Erfindung weist das Linearführungssystem ein Gasdruckfederelement zusammen mit einer Spindelschraube mit Schloßmutter als Arretierungsmechanismus auf. Das Federelement dient der kraftunterstützten Verstellung des erfindungsgemäßen Linearführungssystems, und die Arretierung in einer bestimmten Verfahrposition erfolgt über die Spindelschraube nach dem Schloßmutterprinzip. Beide Stellelemente sind vorzugsweise zwischen den einander zugewandten Seiten der Schienenelemente nebeneinander angeordnet.

Das erfindungsgemäße Linearführungssystem ist vorzugsweise als Teleskopschiene mit zwei in Längsrichtung gegeneinander verfahrbaren Schienenelementen ausgebildet. Besonders bevorzugt sind Teleskopschienenelemente mit im wesentlichen C-förmigem Profil, wie sie auf dem Gebiet gut sind und vielfältig eingesetzt werden. Aus Gründen der Stabilität und/oder zur Verlängerung des möglichen Verfahrweges kann es vorteilhaft sein, zwischen den zwei Schienenelementen wenigstens ein weiteres Schienenelement vorzusehen, das üblicherweise als Mittelschiene bezeichnet wird. Hierbei können die erfindungsgemäßen Stellelemente zwischen jedem der vorhandenen Schienenelemente vorgesehen sein, oder sie sind nur mit den zwei bezüglich der Mittelschienenelemente einander gegenüberliegenden äußersten Schienenelemente verbunden. Die Schienenelemente des erfindungsgemäßen Linearführungssystems sind zweckmäßigerweise über Kugellager, Gleitlager, Rollenlager, Walzenlager oder zwischen den Gleitflächen der Schienen angeordnete Gleitelemente gegeneinander verfahrbar gelagert. Besonders bevorzugt sind Kugellager mit Kugelkäfigen, welche jeweils ein Paar von Kugelsätzen halten, die an entsprechenden Führungsflächen der Schienenelemente abwälzbar angeordnet sind. In diesem Zusammenhang ist jede auf dem Gebiet bekannte Ausführung von Teleskopführungen in dem erfindungsgemäßen Linearführungssystem einsetzbar und stellt nicht den eigentlichen Gegenstand der Erfindung dar.

Weitere Vorteile, Merkmale und Ausgestaltungsformen des erfindungsgemäßen Linearführungssystems werden nun anhand der Beschreibung bevorzugter Ausführungsformen und der dazugehörigen Figuren beschrieben.
- Figur 1A) - 1D): zeigt eine Ausführungsform des erfindungsgemäßen Linearführungssystems mit zwischen den Schienenelementen angeordneter Gasdruckfeder als kraftunterstützendes Stellelement von der Seite (Figur 1A), von vorne mit Blick in Längsrichtung der Schienenelemente (Figur 1B), von oben im ausgefahrenen Zustand (Figur 1C) und von oben im eingefahrenen Zustand (Figur 1D).
- Figur 2A) - 2D): zeigt eine alternative Ausführungsform des erfindungsgemäßen Linearführungssystems mit außerhalb der Schienenelemente angeordneter Gasdruckfeder als kraftunterstützendes Stellelement von der Seite (Figur 2A), von vorne mit Blick in Längsrichtung der Schienenelemente (Figur 2B), von oben im ausgefahrenen Zustand (Figur 2C) und von oben im eingefahrenen Zustand (Figur 2D).
- Figur 3A) - 3C): zeigt eine alternative Ausführungsform des erfindungsgemäßen Linearführungssystems mit Spindelantrieb mit zwischen den Schienenelementen angeordneter Spindelschraube von der Seite (Figur 3A), von vorne (Figur 3B) und von oben (Figur 3C).
- Figur 4A) - 4C): zeigt eine alternative Ausführungsform des erfindungsgemäßen Linearführungssystems mit Spindelantrieb mit außerhalb der Schienenelemente angeordneter Spindelschraube von der Seite (Figur 4A), von vorne (Figur 4B) und von oben (Figur 4C).
- Figur 5A) - 5B): zeigt eine alternative Ausführungsform des erfindungsgemäßen Linearführungssystems mit Schloßmutterfunktion von vorne mit geschlossener Schloßmutter (Figur 5A) und mit geöffneter Schloßmutter (Figur 5B).

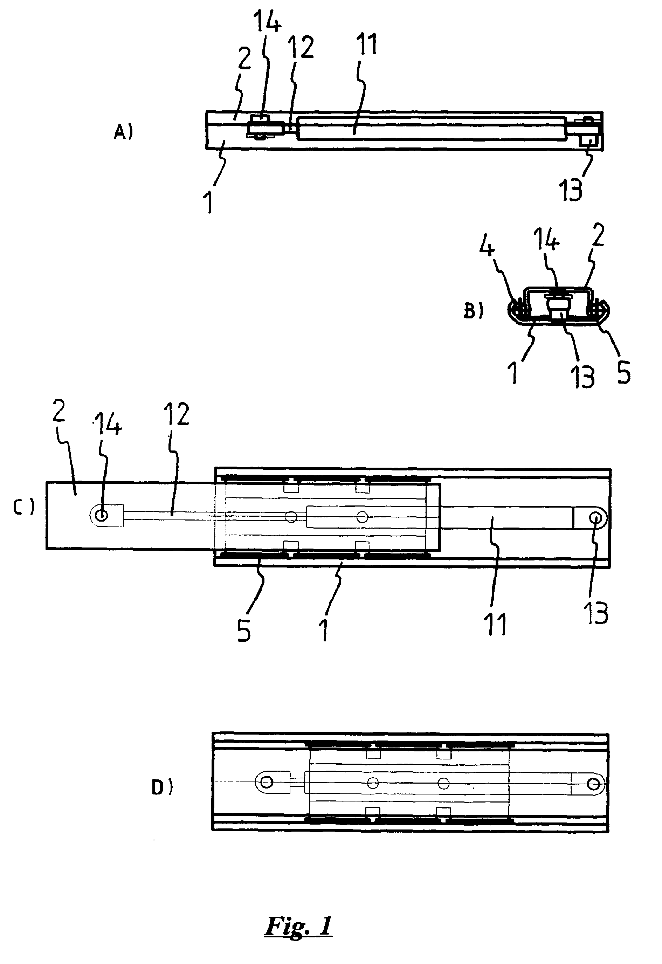

Das erfindungsgemäße Linearführungssystem gemäß Figur 1 umfaßt zwei Schienenelemente 1 und 2, die über ein Kugellager mit Kugeln 4 und einem Kugelkäfig 5 gegeneinander verfahrbar gelagert sind, wie es von herkömmlichen Teleskopschienen bekannt ist. Als kraftunterstützendes Stellelement ist eine Gasdruckfeder mit einem Federzylinder 11 und einem Federkolben 12 zwischen den Schienenelementen 1 und 2 vorgesehen. Das Federelement ist mittels Befestigungselementen 13 und 14 mit den Schienenelementen 1 und 2 fest verbunden. Dabei ist das Schienenelement 1 über das Befestigungselement 13 mit dem Federzylinder 11 und das Schienenelement 2 über das Befestigungselement 14 mit dem Federkolben 12 verbunden. Die Rückstellkraft der Gasdruckfeder wirkt in Richtung des ausgefahrenen Zustandes des Linearführungssystems. Der ausgefahrene Zustand ist in Figur 1C) dargestellt. Im eingefahrenen Zustand, wie er in Figur 1D) gezeigt ist, ist die Gasdruckfeder vorgespannt.

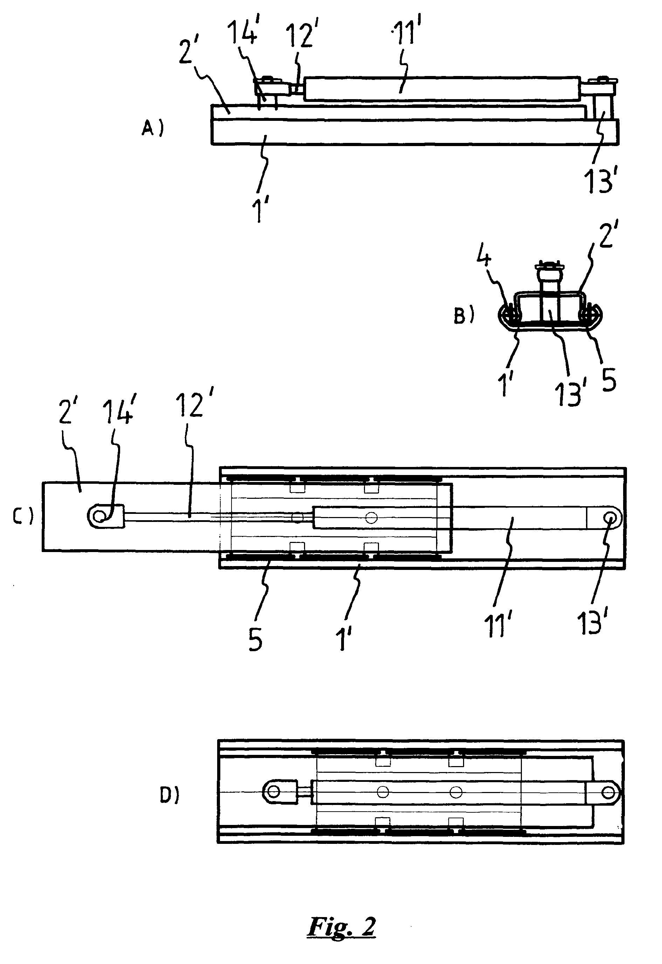

Figur 2 zeigt eine alternative Ausführungsform zum erfindungsgemäßen Linearführungssystem gemäß Figur 1. Bei dem Linearführungssystem gemäß Figur 2 ist das Federelement, welches hier ebenfalls als Gasdruckfeder ausgebildet ist, außerhalb der Schienenelemente 1' und 2' über dem Schienenelement 2' angeordnet. Das Federelement umfaßt ebenfalls einen Federzylinder 11' und einen Federkolben 12' und ist mittels Befestigungselementen 13' und 14' mit den Schienenelementen 1' und 2' fest verbunden. Dabei ist das Schienenelement 2' (im Vergleich zu dem entsprechenden Schienenelement 2 gemäß Figur 1) für die Verbindung zwischen dem Federzylinder 11' und dem Schienenelement 2' über das Befestigungselement 13' verkürzt ausgeführt. Die Rückstellkraft der Gasdruckfeder wirkt, wie bei der Ausführungsform gemäß Figur 1, in Richtung des ausgefahrenen Zustandes des Linearführungssystems. Der ausgefahrene Zustand ist in Figur 2C) und der eingefahrene Zustand in Figur 1 D) gezeigt.

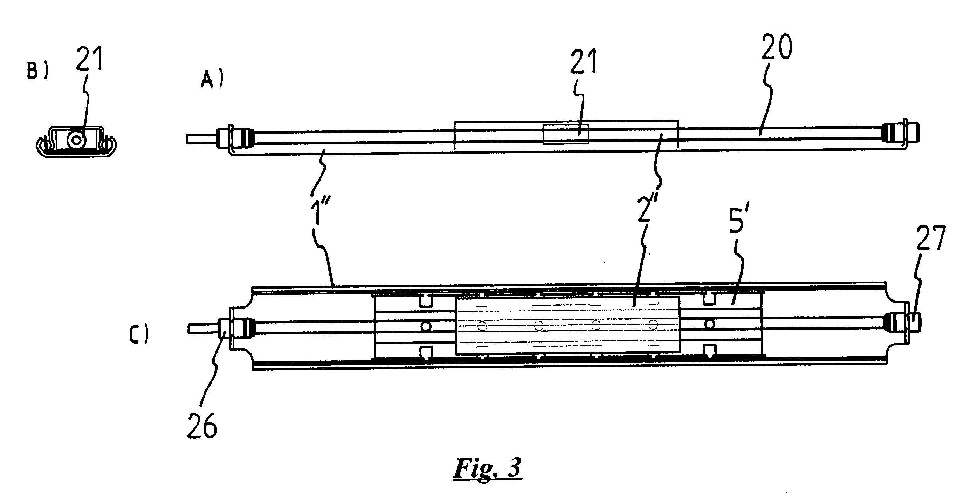

Die in Figur 3 dargestellte Ausführungsform des erfindungsgemäßen Linearführungssystems besteht aus einem ersten Schienenelement 1'' und einem in diesem Fall als kürzerer Schlitten ausgebildeten zweiten Schienenelement 2", die über ein Kugellager gegeneinander verfahrbar angeordnet sind. Zwischen den beiden Endabschnitten des längeren Schienenelementes 1'' erstreckt sich eine mit einem Außengewinde versehene Spindelschraube 20, die über Befestigungs- und Drehlager 26 und 27 an den jeweiligen Enden des Schienenelementes 1'' befestigt und drehbar gelagert ist. Auf einer Seite des Schienenelementes 1'' erstreckt sich die Spindelschraube 20 durch das Befestigungs- und Drehlager 26 hindurch in einen außerhalb des Schienenelementes 1'' angeordneten Abschnitt, über den die Spindelschraube 20 mit einem hand- oder motorbetriebenen Drehmechanismus verbindbar ist. An dem Schienenelement 2" ist eine Schraubenmutter 21 mit Innengewinde befestigt, welche die Spindelschraube 20 umgreift und mit ihr in Eingriff ist. Aufgrund der Gewindesteigung an der Spindelschraube 20 läßt sich das Schienenelement 2" durch Drehen der Spindelschraube 20 entlang des Schienenelementes 1'' verfahren. Je niedriger die Gewindesteigung ist, desto geringer ist die zum Verfahren des Schienenelementes 2" aufzubringende Kraft, aber desto größer ist die Anzahl der für einen bestimmten Verfahrweg erforderliche Anzahl von Drehungen der Spindelschraube 20.

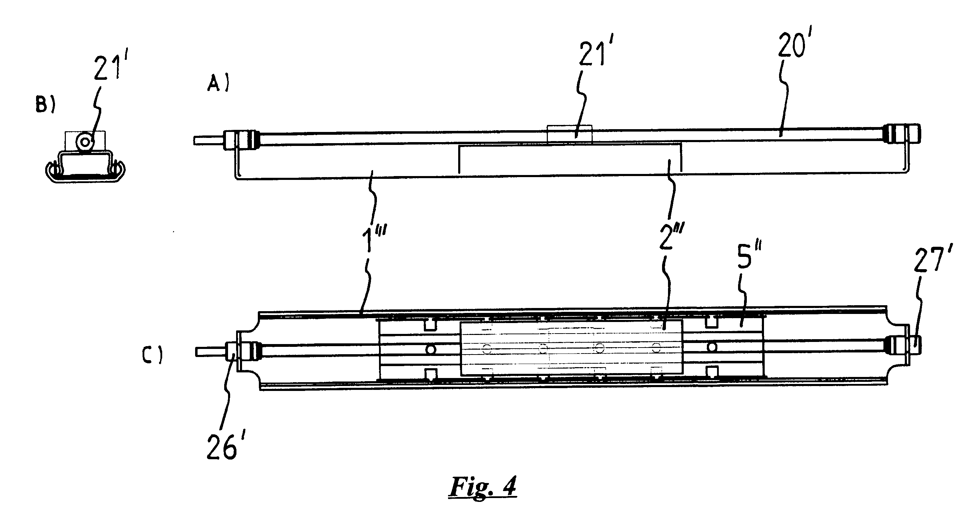

Figur 4 zeigt eine alternative zum erfindungsgemäßen Linearführungssystem gemäß Figur 3. Bei dem Linearführungssystem gemäß Figur 4 ist die Spindelschraube 20' außerhalb der Schienenelemente 1''' und 2''' über dem Schienenelement 2''' angeordnet. Die Spindelschraube 20' ist über Befestigungs- und Drehlager 26' und 27' an den jeweiligen Enden des Schienenelementes 1''' befestigt und drehbar gelagert. Wie bei der Ausführungsform gemäß Figur 3 erstreckt sich die Spindelschraube 20' auf einer Seite des Schienenelementes 1''' durch das Befestigungs- und Drehlager 26' hindurch in einen außerhalb des Schienenelementes 1'" angeordneten Abschnitt, über den die Spindelschraube 20' mit einem Drehmechanismus verbindbar ist. Über dem Schienenelement 2'" ist eine Schraubenmutter 21' mit Innengewinde befestigt, welche die Spindelschraube 20' umgreift und mit ihr in Eingriff ist. Das Schienenelement 2'" läßt sich durch Drehen der Spindelschraube 20' entlang des Schienenelementes 1'" verfahren.

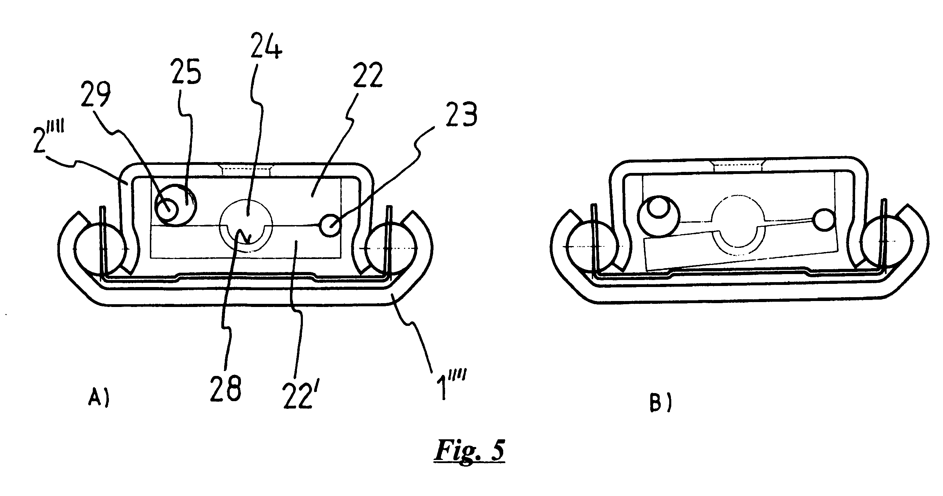

Figur 5 zeigt eine weitere Ausführungsform des erfindungsgemäßen Linearführungssystems mit einer Schloßmutterfunktion. Diese Ausführungsform weist Schienenelemente 1 "" und 2"" auf, die über ein Kugellager gegeneinander verfahrbar gelagert sind. Der Aufbau der Schienenelemente und die Anordnung der Spindelschraube (nicht dargestellt) entspricht im wesentlichen der Ausführungsform gemäß Figur 3, wobei die drehbare Lagerung der Spindelschraube und die Verlängerung über das Schienenelement 1"" hinaus dann nicht erforderlich sind, wenn die Schloßmutterfunktion gemäß Figur 5 ausschließlich als Arretiermechanismus und nicht als Spindelantrieb zum Verfahren des Schienenelementes 2'''' verwendet wird. Beide Verwendungsarten sind bei der Ausführungsform gemäß Figur 5 jedoch in Kombination möglich.

Die Schloßmutter gemäß Figur 5 besteht aus zwei Abschnitten 22 und 22', die dazwischen einen im wesentlichen kreisförmigen Durchgang 24 aufweisen. Der obere Abschnitt 22 der Schloßmutter ist fest an der Innenseite des Schienenelementes 2"" befestigt. Der in diesem Abschnitt 22 vorgesehene Teil des Durchgangs 24 weist eine im wesentlichen glatte Innenfläche auf und ist nicht für einen Eingriff mit dem Außengewinde der Spindelschraube ausgelegt. Dem gegenüber weist der zweite Abschnitt 22' im Bereich des Durchgangs 24 Innengewindeabschnitte 28 auf, die bei geschlossener Schloßmutter mit dem Außengewinde der Spindelschraube in Eingriff treten und das Schienenelement 2"" gegenüber dem Schienenelement 1 "" arretieren.

Die beiden Abschnitte 22 und 22' der Schloßmutter sind über ein Schloßmutterscharnier 23 miteinander verbunden, wobei der untere Abschnitt 22' von dem an dem Schienenelement 2"" fest montierten oberen Abschnitt 22 abschwenkbar bzw. abspreizbar ist. Die beiden Abschnitte 22 und 22' sind über ein Federelement (nicht dargestellt) in Richtung des geschlossenen Zustandes vorgespannt, wie er in Figur 5A) gezeigt ist. Zum Aufspreizen der Abschnitte 22 und 22' weist die Schloßmutter eine an dem oberen Abschnitt 22 exzentrisch über einen Drehpunkt 29 gelagerte Kreisscheibe 25 als Spreizelement auf. Zum Spreizen der Abschnitte 22 und 22' wird die Kreisscheibe 25 um den Drehpunkt 29 gedreht. Dabei drückt die exzentrisch gelagerte Kreisscheibe 25 mit ihrer Umfangsfläche auf eine entsprechende Gegenfläche an dem unteren Abschnitt 22' und spreizt diesen von dem oberen Abschnitt 22 ab, um die Schloßmutter zu öffnen und den Innengewindeabschnitt 28 an dem unteren Abschnitt 22' außer Eingriff mit dem Gewinde der Spindelschraube zu bringen. Der geöffnete Zustand der Schloßmutter ist in Figur 5B) gezeigt. Im geöffneten Zustand kann das zweite Schienenelement 2"" entlang des ersten Schienenelementes 1"" frei verfahren werden. Zum Arretieren in einer neuen Position wird das Spreizelement 25 wieder in die Schließposition gedreht, wie es in Figur 5A) gezeigt ist, und damit der Innengewindeabschnitt 28 am unteren Abschnitt 22' der Schloßmutter wieder in Eingriff mit der Spindelschraube gebracht.

Wie bereits ausgeführt, kann bei der Ausführungsform gemäß Figur 5 als Spindelschraube ein auf der Außenseite eines Federzylinders mit einem Gewinde versehenes Federelement vorgesehen sein, so daß gleichzeitig eine Kraftunterstützung des Verfahrens der Schienenelemente 1 "" und 2"" gegeneinander in einer Richtung realisiert wird.

Bezugszeichen
- 1, 1', 1'', 1''', 1'''': erstes Schienenelement
- 2, 2', 2", 2''', 2"": zweites Schienenelement
- 4: Kugeln
- 5, 5', 5": Kugelkäfig
- 11, 11': Federzylinder
- 12, 12': Federkolben
- 13, 13': Befestigungselement
- 14, 14': Befestigungselement
- 20, 20': Spindelschraube
- 21, 21': Schraubenmutter
- 22, 22': Schloßmutterabschnitte
- 23: Schloßmutterscharnier
- 24: Durchgang
- 25: Kreisscheibe des Spreizelementes
- 26, 26': Befestigungs- und Drehlager
- 27, 27': Befestigungs- und Drehlager
- 28: Innengewindeabschnitt
- 29: Drehpunkt des Spreizelementes

## Patentansprüche

1. Linearführungssystem mit wenigstens zwei in Längsrichtung gegeneinander verfahrbaren Schienenelementen (1, 2, 1', 2', 1", 2", 1"'. 2"', 1"", 2""), wobei an den Schienenelementen (1, 2, 1', 2', 1", 2", 1"', 2"', 1"", 2"") Stellelemente (11, 12, 11', 12', 20, 20', 21, 21', 22, 22') vorgesehen sind, welche die für das Verfahren der Schienenelemente (1, 2, 1', 2', 1", 2", 1"'. 2"', 1"", 2"") erforderliche Kraft unterstützen oder hemmen und/ oder welche ein Arretieren der Schienenelemente (1, 2, 1', 2', 1", 2", 1"', 2"', 1"", 2"") in verschiedenen Verfahrpositionen erlauben, **dadurch gekennzeichnet, daß**
als ein erstes Stellelement wenigstens ein Federelement (11, 12, 11', 12') vorgesehen ist, welches so an den gegeneinander verfahrbaren Schienenelementen (1, 2, 1', 2', 1", 2", 1"', 2"', 1"", 2"") angeordnet ist, daß seine Federkraft die für das Verfahren der Schienenelemente (1, 2, 1', 2', 1", 2", 1"', 2"', 1"", 2"") erforderliche Kraft unterstützt oder hemmt, und
als ein zweites Stellelement an einem ersten Schienenelement (1, 1', 1", 1"', 1"") eine Spindelschraube (20, 20') vorgesehen ist, die sich in der Verfahrrichtung der Schienenelemente erstreckt, oder das Federelement einen Federzylinder (11, 11') aufweist, auf dessen Außenseite ein Spindelgewinde vorgesehen ist.

2. Linearführungssystem nach Anspruch 1, **dadurch gekennzeichnet, daß** das Federelement (11, 12, 11', 12') ein Gasdruckfederelement, ein Gaszugfederelement, ein Spiraldruckfederelement oder ein Spiralzugfederelement ist.

3. Linearführungssystem nach Anspruch 1 oder 2, **dadurch gekennzeichnet, daß** an dem zweiten Schienenelement (2, 2', 2", 2"', 2"") eine die Spindelschraube (20, 20') umgreifende Schraubenmutter (21, 21') mit einem zu der Spindelschraube passenden Innengewinde oder eine die Spindelschraube (20, 20') umgreifende Schloßmutter (22, 22') vorgesehen ist.

4. Linearführungssystem nach Anspruch 3, **dadurch gekennzeichnet, daß** sich die Spindelschraube (20, 20') im wesentlichen über die gesamte Länge des ersten Schienenelementes (1, 1', 1", 1"', 1"") oder darüber hinaus erstreckt.

5. Linearführungssystem nach Anspruch 3 oder 4, **dadurch gekennzeichnet, daß** die Spindelschraube (20, 20') um ihre Längsachse drehbar an dem ersten Schienenelement (1, 1', 1", 1"', 1"") gelagert ist.

6. Linearführungssystem nach einem der Ansprüche 3 bis 5, **dadurch gekennzeichnet, daß** an dem zweiten Schienenelement (2, 2', 2", 2"', 2"") eine Schloßmutter (22, 22') vorgesehen ist, welche Mittel (23, 25, 29) zum Öffnen bzw. Spreizen der Schloßmutter (22, 22') zur Freigabe des Verfahrens des zweiten Schienenelementes (2, 2', 2", 2"', 2"") gegenüber dem ersten Schienenelement (1, 1', 1", 1"', 1"") und zum Schließen der Schloßmutter (22, 22') zur Arretierung des zweiten Schienenelementes (2, 2', 2", 2"', 2"") gegenüber dem ersten Schienenelement (1, 1', 1", 1"', 1"") aufweist.

7. Linearführungssystem nach einem der Ansprüche 1 bis 6, **dadurch gekennzeichnet, daß** als Stellelemente gleichzeitig wenigstens ein Federelement (11, 12, 11', 12') und eine Spindelschraube (20, 20') und eine Schloßmutter (22, 22') vorgesehen sind.

8. Linearführungssystem nach einem der Ansprüche 1 bis 7, **dadurch gekennzeichnet, daß** die Stellelemente (11, 12, 11', 12', 20, 20', 21, 21', 22, 22') zwischen den einander zugewandten Seiten der Schienenelemente (1, 2, 1', 2', 1 ", 2", 1"',2"', 1"",2"") angeordnet sind.

9. Linearführungssystem nach einem der Ansprüche 1 bis 7, **dadurch gekennzeichnet, daß** die Stellelemente (11, 12, 11', 12', 20, , 20', 21, 21', 22, 22') an der Außenseite eines oder beider der Schienenelemente (1, 2, 1', 2', 1", 2", 1"', 2"', 1"", 2"") angeordnet sind.

10. Linearführungssystem nach einem der Ansprüche 1 bis 9, **dadurch gekennzeichnet, daß** zwischen den Schienenelementen (1, 2, 1', 2', 1", 2", 1"', 2"', 1"", 2"") wenigstens ein weiteres Schienenelement (Mittelschiene) vorgesehen ist.

11. Linearführungssystem nach einem der Ansprüche 1 bis 10, **dadurch gekennzeichnet, daß** die Schienenelemente (1, 2, 1', 2', 1", 2", 1"', 2"', 1"", 2"") über Kugellager (4, 5, 5', 5"), Gleitlager, Rollenlager, Walzenlager oder Gleitelemente gegeneinander verfahrbar gelagert sind.

## Claims

1. A linear guide system comprising at least two rail elements (1, 2, 1', 2', 1", 2", 1"', 2"', 1"", 2"") which are displaceable relative to each other in the longitudinal direction, wherein provided at the rail elements (1, 2, 1', 2', 1", 2", 1"', 2"', 1"", 2"") are control elements (11, 12, 11', 12', 20, 20', 21, 21', 22, 22') which assist or inhibit the force required for displacement of the rail elements (1, 2, 1', 2', 1", 2", 1'", 2"', 1"", 2"") and/or which allow arresting of the rail elements (1, 2, 1', 2', 1", 2", 1"', 2"', 1 "", 2"") in various displacement positions, **characterised in that**
provided as a first control element is at least one spring element (11, 12, 11', 12') which is so arranged at the mutually displaceable rail elements (1, 2, 1', 2', 1", 2", 1"', 2"', 1"", 2"") that its spring force assists or inhibits the force required for displacement of the rail elements (1, 2, 1', 2', 1", 2", 1"', 2"', 1"", 2""), and
provided as a second control element at a first rail element (1, 1', 1", 1"', 1"") is a spindle screw (20, 20') which extends in the direction of displacement of the rail elements or the spring element has a spring cylinder (11, 11'), at the outside of which is provided a spindle screwthread.

2. A linear guide system according to claim 1 **characterised in that** the spring element (11, 12, 11', 12') is a gas compression spring element, a gas tension spring element, a coil compression spring element or a coil tension spring element.

3. A linear guide system according to claim 1 or claim 2 **characterised in that** provided at the second rail element (2, 2', 2", 2"', 2"") is a screw nut (21, 21') embracing the spindle screw (20, 20'), with a female screwthread matching the spindle screw or a clasp nut (22, 22') embracing the spindle screw (20, 20').

4. A linear guide system according to claim 3 **characterised in that** the spindle screw (20, 20') extends substantially over the entire length of the first rail element (1, 1', 1", 1"', 1"") or therebeyond.

5. A linear guide system according to claim 3 or claim 4 **characterised in that** the spindle screw (20, 20') is mounted to the first rail element (1, 1', 1", 1"', 1"") rotatably about the longitudinal axis of the screw.

6. A linear guide system according to one of claims 3 to 5 **characterised in that** provided at the second rail element (2, 2', 2", 2"', 2"") is a clasp nut (22, 22') having means (23, 25, 29) for opening or spreading the clasp nut (22, 22') for enabling displacement of the second rail element (2, 2', 2", 2"', 2"") with respect to the first rail element (1, 1', 1", 1"', 1"") and for closing the clasp nut (22, 22') for arresting the second rail element (2, 2', 2", 2"', 2"") with respect to the first rail element (1,1', 1", 1"', 1"").

7. A linear guide system according to one of claims 1 to 6 **characterised in that** provided as control elements at the same time are at least one spring element (11, 12, 11', 12') and a spindle screw (20, 20') and a clasp nut (22, 22').

8. A linear guide system according to one of claims 1 to 7 **characterised in that** the control elements (11, 12, 11', 12', 20, 20', 21, 21', 22, 22') are arranged between the mutually facing sides of the rail elements (1, 2, 1', 2', 1", 2", 1"', 2"', 1"", 2"").

9. A linear guide system according to one of claims 1 to 7 **characterised in that** the control elements (11, 12, 11', 12', 20, 20', 21, 21', 22, 22') are arranged at the outside of one or both of the rail elements (1, 2, 1', 2', 1", 2", 1"', 2"', 1"", 2"").

10. A linear guide system according to one of claims 1 to 9 **characterised in that** provided between the rail elements (1, 2, 1', 2', 1", 2", 1"', 2"', 1 "", 2"") is at least one further rail element (central rail).

11. A linear guide system according to one of claims 1 to 10 **characterised in that** the rail elements (1, 2, 1', 2', 1", 2", 1"', 2"', 1"", 2"") are supported displaceably relative to each other by way of ball bearings (4, 5, 5', 5"), plain bearings, rolling bearings, roller bearings or slide elements.

## Revendications

1. Système de guidage linéaire comprenant au moins deux éléments rail (1, 2, 1', 2', 1", 2", 1"', 2"', 1"", 2""), mobiles l'un vers l'autre dans la direction longitudinale, des éléments d'actionnement (11, 12, 11', 12', 20, 20', 21, 21', 22, 22') soutenant ou bloquant la force nécessaire pour le déplacement des éléments rails (1, 2, 1', 2', 1", 2", 1"', 2"', 1"", 2"") et/ou permettant un verrouillage des éléments rails (1, 2, 1', 2', 1", 2", 1'"', 2"', 1"", 2"") dans différentes positions de déplacement prévus sur les éléments rails (1, 2, 1', 2', 1", 2", 1'"', 2"', 1"", 2""),
**caractérisé en ce que**
un élément ressort (11, 12, 11', 12') disposé sur les éléments rails (1, 2, 1', 2', 1", 2", 1"', 2"', 1"", 2"") mobiles les uns vers les autres de sorte que sa force élastique soutienne ou bloque la force nécessaire pour le déplacement des éléments rails (1, 2, 1', 2', 1", 2", 1"', 2"', 1"", 2"") est prévu comme premier élément d'actionnement, et
une vis à broche (20, 20') s'étendant dans la direction de déplacement des éléments rail est prévue comme second élément d'actionnement sur un premier élément rail (1, 1', 1", 1"', 1""), ou l'élément ressort comprend un cylindre à ressort (11, 11') sur la face extérieure duquel est prévu un filet de broche.

2. Système de guidage linéaire selon la revendication 1, **caractérisé en ce que** l'élément ressort (11, 12, 11', 12') est un élément ressort de pression de gaz, un élément ressort de pression en spirale ou un élément ressort de traction en spirale.

3. Système de guidage linéaire selon la revendication 1 ou 2, **caractérisé en ce qu'**un écrou (21, 21') enserrant la vis à broche (20, 20') et pourvu d'un filet intérieur adapté à la vis à broche ou d'un écrou de serrage (22, 22') enserrant la vis à broche (20, 20') est prévu sur le second élément rail (2, 2', 2", 2"', 2"").

4. Système de guidage linéaire selon la revendication 3, **caractérisé en ce que** la vis à broche (20, 20') s'étend sensiblement sur toute la longueur du premier élément rail (1, 1', 1", 1 "', 1 "") ou au-delà de celui-ci.

5. Système de guidage linéaire selon la revendication 3 ou 4, **caractérisé en ce que** la vis à broche (20, 20') est montée sur le premier élément rail (1, 1', 1", 1"', 1 "") de manière à pouvoir tourner autour de son axe longitudinal.

6. Système de guidage linéaire selon l'une quelconque des revendications 3 à 5, **caractérisé en ce qu'**un écrou de serrage (22, 22') comprenant des moyens (23, 25, 29) destinés à ouvrir ou encore écarter les écrous de serrage (22, 22') pour libérer le déplacement du second élément rail (2, 2', 2", 2"', 2"") par rapport au premier élément rail (1, 1', 1", 1"', 1 "") et à fermer les écrous de serrage (22, 22') pour verrouiller le second élément rail (2, 2', 2", 2"', 2"") par rapport au premier élément rail (1, 1 ", 1"', 1 "") est prévu sur le second élément rail (2, 2', 2", 2"', 2"").

7. Système de guidage linéaire selon l'une quelconque des revendications 1 à 6, **caractérisé en ce qu'**au moins un élément ressort (11, 12, 11', 12') et une vis à broche (20, 20') et un écrou de serrage (22, 22') sont prévus simultanément comme éléments d'actionnement.

8. Système de guidage linéaire selon l'une quelconque des revendications 1 à 7, **caractérisé en ce que** les éléments d'actionnement (11, 12, 11', 12', 20, 20', 21, 21', 22, 22') sont disposés entre les faces tournées l'une vers l'autre des éléments rail (1, 2, 1', 2', 1", 2", 1"', 2"', 1"", 2"").

9. Système de guidage linéaire selon l'une quelconque des revendications 1 à 7, **caractérisé en ce que** les éléments d'actionnement (11, 12, 11', 12', 20, 20', 21, 21', 22, 22') sont disposés sur la face extérieure d'un des ou des deux éléments rails (1, 2, 1', 2', 1 ", 2", 1"', 2"', 1"", 2"").

10. Système de guidage linéaire selon l'une quelconque des revendications 1 à 9, **caractérisé en ce qu'**au moins un autre élément rail (rail central) est prévu entre les éléments rail (1, 2, 1', 2', 1", 2", 1"', 2"', 1"", 2"").

11. Système de guidage linéaire selon l'une quelconque des revendications 1 à 10, **caractérisé en ce que** les éléments rail (1, 2, 1', 2', 1", 2", 1"', 2"', 1 "", 2"") sont montés mobiles l'un vers l'autre par l'intermédiaire de roulements à billes (4, 5, 5', 5"), de paliers à glissement, de paliers à rouleaux, de roulements à rouleaux ou d'éléments glissants.
